# EUROPÄISCHE PATENTSCHRIFT

(11) **EP 2 437 020 B1**
(45) Veröffentlichungstag und Bekanntmachung des Hinweises auf die Patenterteilung: **12.08.2015**
(21) Anmeldenummer: 10186238.1
(22) Anmeldetag: 01.10.2010
(51) Int. Cl.: F27B 17/02, B65D 81/34, A61C 13/20, H05B 6/64

(54) **Mikrowellenofen**
Microwave oven
Four à micro-ondes

(43) Veröffentlichungstag der Anmeldung: 04.04.2012
(73) Patentinhaber: Ivoclar Vivadent AG, 9494 Schaan (LI)
(72) Erfinder: Jussel, Rudolf, Dipl. Ing. FH, 6805 Feldkirch-Gisingen (AT); Laubersheimer, Jürgen, Dr., 9470 Buchs (CH); Werling, Christian, 88131 Lindau (DE)
(74) Vertreter: Baronetzky, Klaus

(56) Entgegenhaltungen:
- EP-A2- 2 150 092
- WO-A1-2009/039220
- JP-A- 11 106 283

## Beschreibung

Die Erfindung betrifft einen Mikrowellenofen, gemäß dem Oberbegriff von Anspruch 1.

Mikrowellenöfen für die Herstellung von Stoffen und/oder Bauteilen, insbesondere keramischen Bauteilen und/oder Dentalkeramiken sind seit längerem bekannt, wobei beispielhaft auf die EP 1 060 713 A2 verwiesen wird. Auch die Verwendung von Suszeptoren für Mikrowellen ist seit langem bekannt, beispielsweise aus der DE-OS 2 021 901, die die Verwendung von Suszeptoren, aber auch die Heizung über Mikrowellen erwähnt.

Verschiedene Materialien, die für Mikrowellenerwärmungsgeräte verwendet werden können, sind in der DE 37 03 163 A1 angesprochen. Der dortige Suszeptor dient zur Absorption der Mikrowellenstrahlung.

Die WO 2009/039220 A1 beschreibt eine Vorrichtung zur Wärmebehandlung von Siliziumwafern in der Halbleiterproduktion, wobei dort unter anderem auch SiC-Suszeptoren, die sich oberhalb und unterhalb der Waferscheibe befinden, erwähnt werden. Über die Struktur des dort verwendeten SiC wird jedoch keine Aussage gemacht.

Die JP 11-106283 (Abstract) beschreibt darüber hinaus einen Suszeptor aus entweder hochreinem Aluminium oder aus SiC (mit 1,1 bis 10 Gewichts-% freien Kohlenstoff und 0,1 - 5 Gewichts-% Bor) mit einer kubischen Kristallstruktur.

Die EP 2 150 092 A2 beschreibt ebenfalls einen Mikrowellensuszeptor, welcher einen die Dentalteile umgebenden Außenring sowie einen zentral angeordneten Innenring umfasst.

Beim Wärmebehandeln von Dentalkeramiken mittels Mikrowellen ist es wesentlich, dass die verwendeten Suszeptoren über einen breiten Bereich ankoppeln. Diese Anforderung lässt sich vergleichsweise gut mit Siliciumcarbid erfüllen, das zudem eine Temperaturfestigkeit > 2.000 °C hat, also den erwünschten Temperaturbereich für das Wärmebehandeln von Keramiken, insbesondere Dentalkeramiken, ebenfalls sicher abdeckt.

Die bislang verwendeten Silicumcarbid-Qualitäten weisen jedoch häufig durch den Herstellungsprozess bedingte Verunreinigungen, zum Beispiel mit Vanadium oder Mangan usw., auf, die zum Beispiel Verfärbungen der wärmezubehandelnden Objekte auslösen können.

Gerade bei grossen keramischen Bauteilen und/oder mehrgliedrigen Brücken oder größeren Dentalersatzteilen ist es wesentlich, dass eine gleichmäßige Erwärmung stattfindet und dadurch wärmeinduzierte Spannungen sowie die damit einhergehende mögliche Ausbildung von Mikrorissen in den wärmezubehandelnden Objekten verhindert werden.

Demgegenüber liegt der Erfindung die Aufgabe zugrunde, einen Mikrowellenofen zur Wärmebehandlung von Stoffen und Bauteilen, insbesondere keramischen Bauteilen, insbesondere zum Wärmebehandeln von dentalkeramischen Bauteilen, gemäß dem Oberbegriff von Anspruch 1, bereitzustellen, der hinsichtlich der Zykluszeit verbessert ist, ohne dass Qualitätseinbußen beim fertigen Dentalrestaurationsteil zu befürchten wären.

Diese Aufgabe wird erfindungsgemäß durch Anspruch 1 gelöst. Vorteilhafte Weiterbildungen ergeben sich aus den Unteransprüchen.

Es wurde erkannt, dass erstaunlicherweise das Ankoppelverhalten von SiC-Einkristallen überragend besser ist als dasjenige von bisher gebräuchlichen Suszeptoren mit kommerziell erhältlichen SiC-Qualitäten. Dieses überragend bessere Kopplungsverhalten geht einher mit einer überragenden Wärmeleitfähigkeit, die dem Temperaturausgleich zwischen jeglichen in den Ofenraum eingebrachten, wärmezubehandelnden Stoffen und/oder Bauteilen, unabhängig von deren eigenem Kopplungsverhalten, dienlich ist.

Im Gegensatz hierzu sind die in dieser Erfindung beschriebenen SiC-Qualitäten, auf Grund der Tatsache, dass sie aus nur einem Kristall Si und C bestehen, hochrein. Insbesondere weisen diese Verunreinigungen von weniger als 10⁻¹, bevorzugt weniger als 20⁻² ppm auf.

Die Wärmeleitfähigkeit ist gegenüber dem kommerziell erhältlichen Siliciumcarbid-Bauteilen signifikant besser, was dazu führt, dass die Heizgradienten erheblich erhöht werden können, beispielsweise auch bei Bauteilen in komplexer Geometrie auf Heizraten von mehr als 400 °K/Minute. Offenbar verteilt das hochreine und bevorzugt als Einkristall vorliegende Siliciumcarbid die eingeleitete Wärme wesentlich besser, so dass keine inhomogene Wärmeverteilung mehr vorliegt.

Insbesondere bei Bauteilen, die selbst keine gute Wärmeleitfähigkeit und/oder Eigenankopplung an die Mikrowellenstrahlung aufweisen, ist der Einsatz des beschriebenen SiC-Einkristalls als Suszeptor von Vorteil, da dieser selbst hervorragend an die Mikrowellenstrahlung ankoppelt und die entstehende Wärme in extrem kurzer Zeit sehr homogen verteilt. Durch diese Eigenschaften ist es möglich, etwaige, bei konventionellen Öfen notwendige Haltezeiten zu verkürzen und/oder, auf Grund der raschen Temperatur-Homogenisierung, schneller zu heizen, wodurch die Prozesszeiten stark verringert werden können. Dies alles kann unter Verwendung eines SiC-Einkristalls ohne die Gefahr von Wärmespannungen und Mikrorissen durchgeführt werden, also sind in kürzerer Zeit, bei mindestens gleicher, möglicherweise besserer Qualität als in der konventionellen Technik, Wärmebehandlungen von Stoffen und/oder Bauteilen durchführbar.

Überraschend ist das Risiko von Eigendefekten und auch Verfärbungen gravierend reduziert. Da das SiC-Basismaterial aus einem Kristall aus Silicium und Kohlenstoff besteht, die durch einen Sublimationsprozess an einem SiC-Kernkristall aus der Basisphase abgeschieden werden, entstehen keine Verunreinigungsmöglichkeiten für den wärmezubehandelnden Stoff und/oder das Bauteil, insbesondere das dentalkeramische Bauteil, so dass auch Verfärbungen nicht wirklich eine Gefahr sind.

Überraschend kann eine deutlich geringere Masse für den Suszeptor im Vergleich zu bisher verwendeten SiC-Qualitäten verwendet werden, was ein wesentlich besseres Verhältnis von Heizleistung zu Suszeptormasse mit sich bringt.

Überraschend ergibt die Verwendung von hochreinem Siliciumcarbid in hexagonaler oder kubischer Kristallstruktur für einen Suszeptor - im Grunde nahezu unabhängig von der äußeren Form des Suszeptors - eine verbesserte Ankopplung des zu erwärmenden,Stoffs und/oder,- keramischen Bauteils. Der Suszeptorkoppelt über ein sehr breites Temperaturband sehr homogen an und gibt die aufgenommene Wärme aufgrund seiner überragenden Wärmeleitfähigkeit sofort an den wärmezubehandeinden Stoff bzw. das dentalkeramische Bauteil ab.

Beispielsweise kann der Suszeptor einen napfförmigen Grundaufbau haben, so dass das Dentalrestaurationsteil in horizontaler Richtung allseitig von dem Suszeptor umgeben ist und gleichmäßig mit Wärme beaufschlagt wird.

Erfindungsgemäß ist es ferner günstig, dass auch eine einseitige Beaufschlagung eines beispielsweise topfförmigen Suszeptors mit Mikrowellenstrahlung nicht zur Entstehung von nennenswerten Temperaturgradienten führt: Durch die hohe Wärmeleitfähigkeit wird auch der von der Mikrowellenquelle ferne Teil des Suszeptors umgehend erwärmt und die Problematik von etwaigen Wärmespannungen bzw. den daraus resultierenden Mikrorissen, sogar in Verbindung mit schnellerem Heizen, reduziert.

Diese überraschende Eigenschaft führt dazu, dass der Entwickler des Mikrowellenofens eine größere gestalterische Freiheit hat: während bei den klassischen Suszeptoren bislang stets die Reflektionen der Mikrowellenstrahlung in den Raum des Mikrowellenofens genau eingeplant werden mussten, um eine möglichst gleichmäßige Mikrowellenstrahlung-Beaufschlagung des Suszeptors zu erzielen, gilt dies nun nicht mehr. Sowohl im Monomode- als auch im Mutimode-Betrieb lassen sich die erwünschte Temperaturvergleichmässigung und eine robuste Anpassung der (Ofen-) Anlage ohne weiteres bereitstellen.

In vorteilhafter Ausgestaltung weist der Kristall-Suszeptor eine glatte und optisch ansprechende Oberfläche auf. Dies hat gegenüber einer Mikropunktauflage, wie sie zum Beispiel bei gesinterten Siliciumcarbidkörpern entsteht, auch den besonderen Vorteil, dass eine großflächige Auflage möglich ist, die den Wärmeübergangswiderstand zwischen dem Suszeptor und dem Dentalrestaurationsteil verbessert.

Es versteht sich, dass die Form des oder der erfindungsgemäßen Kristall-Suszeptoren in weiten Bereichen an die Erfordernisse anpassbar ist. Beispielsweise können auch Suszeptorkörper bereitgestellt werden, die je einzeln in dichtester Kugelpackung angeordnet sind, als Kristall-Suszeptoren ausgebildet sind und das wärmezubehandeinde Objekt eng anliegend umgeben.

Erfindungsgemäß ist es besonders günstig, dass zur Wärmebehandlung von Stoffen und/oder Bauteilen, besonders von keramischen Bauteilen, insbesondere von dentalkeramischen Bauteilen, mit einem Suszeptor, der im Wellengang oder in dem mit Mikrowellenstrahlung beaufschlagten Bereich zwischen einer Mikrowellenquelle und dem Bauteil angeordnet ist, dadurch gekennzeichnet, dass der Suszeptor aus hochreinem Siliciumcarbid in hexagonaler, rhomboedrischer oder kubischer Kristallstruktur, insbesondere in 2H-, 4H-, 6H- oder 3C-Kristallstruktur, aufweist.

Es ist vorgesehen, dass es sich bei dem Siliciumcarbid um einen Einkristall handelt.

Gemäß einer vorteilhaften Ausgestaltung ist es vorgesehen, dass das Bauteil an Mikrowellenstrahlungen breitbandig, insbesondere über ein Band von mehr als 10 % der Mikrowellen-Grundfrequenz der verwendeten Mikrowellenquelle, ankoppelt, insbesondere bereits bei Raumtemperatur und/oder bei 0°C und auch bei der für das Sintern von Dentalkeramiken höchsten verwendeten Temperatur, insbesondere auch bei 2000°C.

Gemäß einer vorteilhaften Ausgestaltung ist es vorgesehen, dass der Mikrowellenofen eine für den Monomoden- oder für den Multimoden-Betrieb geeignete Kavität aufweist.

Gemäß einer vorteilhaften Ausgestaltung ist es vorgesehen, dass der Suszeptor gegenüber dem Stoff und/oder dem keramischen Bauteil inert oder nicht-reaktiv, insbesondere an seiner Oberfläche, ausgestaltet ist und bei Anlage auch bei hohen Temperaturen eine chemische Reaktion zwischen Bauteil und Suszeptor vermieden wird.

Gemäß einer vorteilhaften Ausgestaltung ist es vorgesehen dass der Suszeptor eine Wärmeleitfähigkeit >200 W/mK aufweist, insbesondere etwa 350 W/mK.

Gemäß einer vorteilhaften Ausgestaltung ist es vorgesehen, dass der Suszeptor eine geometrische Ausbildung in Ring-, Scheiben- oder sonstigen geometrischen Formen besitzt und in direktem Kontakt bzw. in unmittelbarer Nähe zum wärmezubehandelnden Bauteil und/oder Stoff steht.

Gemäß einer vorteilhaften Ausgestaltung ist es vorgesehen, dass ein maximaler Abstand des Suszeptors zu dem Stoff oder Bauteil < 5 cm beträgt.

Gemäß einer vorteilhaften Ausgestaltung ist es vorgesehen, dass der Mikrowellenofen einen geschlossenen Innenraum aufweist, der mit der Mikrowellenquelle in Wellenverbindung steht, wobei die Mikrowellenquelle die einzige Wärmequelle ist.

Gemäß einer vorteilhaften Ausgestaltung ist es vorgesehen, dass der Mikrowellenofen eine zusätzliche Wärmequelle, insbesondere eine Infrarot-strahlende Wärmequelle aufweist, die den Suszeptor und/oder das Bauteil oder den Stoff mit Wärmeenergie beaufschlagt.

Gemäß einer vorteilhaften Ausgestaltung ist es vorgesehen, dass ein optischer Temperaturmesssensor auf eine Suszeptoroberfläche gerichtet ist, insbesondere auf eine dem Bauteil zugewandte Suszeptoroberfläche, wenn ein offener Suszeptor eingesetzt ist, und die Temperatur des Bauteils basierend auf der Oberfläche des Suszeptors erfasst.

Gemäß einer vorteilhaften Ausgestaltung ist es vorgesehen, dass der Stoff oder das Bauteil nicht selbst-koppelnd für Mikrowellenstrahlung ist und seine Erwärmung vollständig durch Wärmeabgabe des Suszeptors erfährt.

Gemäß einer vorteilhaften Ausgestaltung ist es vorgesehen, dass der Stoff oder das Bauteil selbständig koppelnd für Mikrowellenstrahlung ist und der Suszeptor als Grundlast-Mikrowellensenke ausgebildet ist und ein vorgegebenes Maß an Mikrowellenstrahlung absorbiert und insbesondere eine gleichmäßige Temperaturverteilung, frei von Hot Spots, bewirkt.

Gemäß einer vorteilhaften Ausgestaltung ist es vorgesehen, dass der Innenraum des Mikrowellenofens gasdicht abgeschlossen ist und unter Über- oder Unterdruck setzbar ist, und insbesondere mit einem Spülgas spülbar ist und besonders bevorzugt als offener oder geschlossener Durchlaufofen ausgebildet ist.

Gemäß einer vorteilhaften Ausgestaltung ist es vorgesehen, dass der Suszeptor die Kopplung der keramischen Bauteile an die elektromagnetische Strahlung verhindert und abschirmt und insbesondere weniger als 10% der eintreffenden elektromagnetischen Strahlung zum Bauteil durchlässt.

Gemäß einer vorteilhaften Ausgestaltung ist es vorgesehen, dass der Suszeptor eine glatte, optisch ansprechende Oberfläche aufweist.

Weitere Vorteile, Einzelheiten und Merkmale ergeben sich aus der nachstehenden Beschreibung eines Ausführungsbeispiels der Erfindung anhand der Zeichnung.

Es zeigen:
- Fig. 1: eine schematische Ansicht eines Mikrowellenofens in einer möglichen Ausführungsform der Erfindung;
- Fig. 2: eine schematische Ansicht, der erfindungsgemäß hergestellt ist, in der Ausführungsform gemäß Fig. 1;
- Fig. 3: ein Diagramm für den Vergleich der Aufheizkurve eines erfindungsgemäßen Mikrowellenofens in der Ausführungsform gemäß Fig. 1; und
- Fig. 4: eine andere Aufheizkurve des erfindungsgemäßen Mikrowellenofens, im Vergleich mit einem mit konventionell erhältlichen SiC betriebenen Mikrowellenofen.

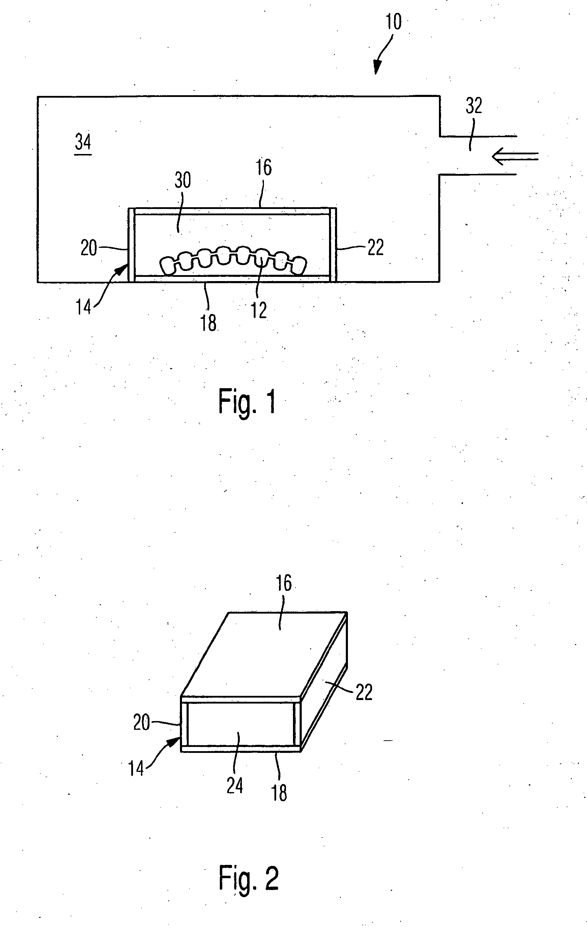

Fig. 1 zeigt in schematischer Darstellung einen Mikrowellenofen 10 für die Wärmebehandlung eines dentalkeramischen Bauteils 12. Wie ersichtlich ist, ist das dentalkeramische Bauteil komplex und groß und ist hier beispielhaft aufgeführt. Es versteht sich, dass anstelle dessen auch beliebiger anderer geeigneter dentalkeramischer Bauteile wärmebehandelt werden können, auch beispielsweise mehrere Bauteile gemeinsam.

Erfindungsgemäß ist ein besonderer Suszeptor 14 vorgesehen, der das Bauteil 12 mindestens teilweise umgibt, im dargestellten Ausführungsbeispiel vollständig umgibt.

Der erfindungsgemäße Suszeptor 14 ist ein Suszeptor aus hochreinem Siliciumcarbid in hexagonaler Kristallstruktur, wobei beispielhaft eine 4H-Kristallstruktur vorgesehen ist.

Es versteht sich, dass anstelle dessen auch ohne weiteres eine 2H- oder eine 6H-Kristallstruktur realisiert werden kann, oder eine kubische 3C-Kristallstruktur.

Bevorzugt handelt es sich bei dem Suszeptor 14 hinsichtlich der einzelnen Wände, auch der Boden- und Deckenwände, je um ein Einkristall.

Der Suszeptor 14, der auch in Fig. 2 perspektivisch dargestellt ist, besteht fertigunstechnisch bedingt aus einzelnen plattenförmigen Wänden. Bei der Auslegung des Suszeptors kann die Wandstärke sehr gering gehalten werden, wobei es sich versteht, dass die Wandstärke in beliebiger Weise an die Erfordernisse anpassbar ist.

In dem dargestellten Ausführungsbeispiel ist der Suszeptor 14 quaderförmig oder zylinderörmig und geschlossen. Er weist eine Deckenwand 16, eine Bodenwand 18, eine linke Seitenwand 20, eine rechte Seitenwand 22, eine vordere Seitenwand 24 sowie eine nicht ersichtliche Rückwand auf.

Anstelle dessen ist auch eine offene Bauweise ohne die Deckenwand 16 möglich.

Die Wände, abgesehen von der Deckenwand 16, sind in beliebiger geeigneter Weise, beispielsweise durch eingefräste Nuten, miteinander verbunden. Die Deckenwand 16 ist hingegen einfach aufgelegt und weist gegebenenfalls endseitig eine kleine Abschrägung auf, die sie etwas in den Innenraum 34 einsinken lässt, so dass sie unverlierbar auf den Seitenwänden 20, 22, der Vorderwand 24 und der Rückwand aufliegt.

Sämtliche Wände 16 bis 24 sind aus einer Platte ausgeschnitten, die als Einkristall hergestellt ist. Für die Herstellung wird bevorzugt polykristallines SiC sublimiert. Es kann das PVT-Verfahren eingesetzt werden oder die modifizierte Lely-Methode, oder ein beliebiges anderes, geeignetes Verfahren zur Erzeugung von einkristallinem Silicumcarbid.

Es ist auch möglich, den Einkristall durch Chemical Vapor Deposition epitaxial zu erzeugen. Ein mögliches Verfahren ist in der WO 01/04389 beschrieben.

Es versteht sich, dass auch beliebige andere Formen für die Herstellung eines mindestens teilweise geschlossenen Suszeptors 14 realisierbar sind. Für die Realisierung mittels Einkristallen ist jedoch die Verwendung von planen Wänden günstig.

Wie ersichtlich ist, ist eine recht geringe Wandstärke für die Realisierung des Suszeptors 14 vorgesehen. Die Wandstärke kann auch deutlich unter 3 mm reduziert werden, je nach Größe des Suszeptors 14.

Während bevorzugt eine hexagonale Kristallstruktur verwendet wird, von der bei SiC mehr als 170 Modifikationen bekannt sind, ist es auch möglich, die kubische Kristallstruktur oder Zinkblende-Struktur zu verwenden, bei der der Kristall aus zwei kubisch flächenzentrierten Gittern verschiedener Atomsorten aufgebaut ist, die gegeneinander um ein Viertel der Raumdiagonalen verschoben sind. Dieses SiC wird auch als β-SiC bezeichnet, während die anderen SiC-Modifikationen entweder eine hexagonale oder rhomboedrische Einheitszelle aufweisen und zusammenfassend als α-SiC bezeichnet werden. α-Phasen treten erst bei der Erzeugung mit Temperaturen mit mehr als 1.800 °C in nennenswertem Umfang auf, also beispielsweise bei der Sublimationszüchtung mit 2.000 °C, wie sie gemäß der WO 01/04389, auf die vollinhaltlich Bezug genommen wird, vorgesehen ist.

In an sich bekannter Weise wird der Mikrowellenofen 10 über ein nicht dargestelltes Magnetron mit Mikrowellenenergie versorgt, die über einem Eingang 32 dem Innenraum 34 des Mikrowellenofens 10 zugeleitet wird. Der Innenraum 34 ist wesentlich größer als der Suszeptor 14, beispielsweise in einem Volumenverhältnis von 20:1. Auch wenn Modenrührer vorgesehen sein können, ist dies erfindungsgemäß nicht nötig, denn trotz der geringen Wandstärke besteht bei α-SiC, aber auch bei β-SiC, eine überragende Wärmeleitfähigkeit von 350 W/mK oder gar 400 W/mK so dass die an einem etwaigen "Hot Spot" eingeleitete Mikrowellenenergie sich rasch gleichmäßig verteilt.

Durch die geringe Wandstärke hat der SiC-Suszeptor andererseits eine besonders geringe Wärmekapazität, was eine schnelle Aufheizung begünstigt.

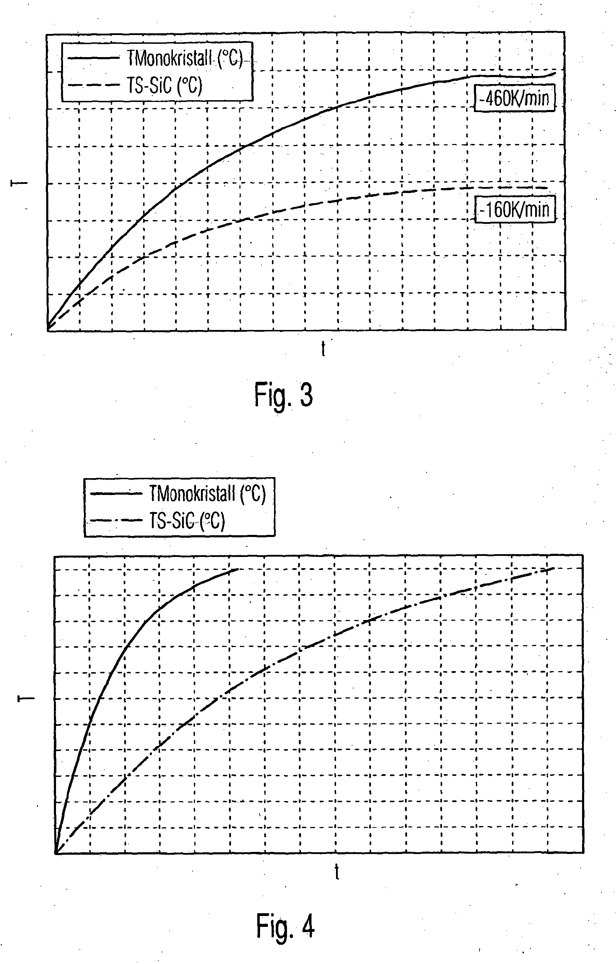

Gemäß Fig. 3 ist eine Aufheizkurve eines erfindungsgemäßen Mikrowellenofens 10 in durchgezogener Linie dargestellt, während die Aufheizkurve eines konventionellen Mikrowellenofens 10 in gestrichelter Form dargestellt ist. Die Aufheizung erfolgt erfindungsgemäß mit einer maximalen Kurvenneigung von 360 Kelvin/Min., während ein üblicher Mikrowellenofen 10 auf maximal 180 Kelvin/Min. kommt.

In Fig. 4 ist eine modifizierte Aufheizkurve für einen Ofen mit geringerer Wärmekapazität und dementsprechend geringerer Zykluszeit dargestellt. Auch hier ist wiederum im Vergleich zwischen der durchgezogenen Linie mit dem erfindungsgemäßen Mikrowellenofen 10 und der strichpunktierten Linie mit dem konventionellen Mikrowellenofen ersichtlich, dass der Aufheizgradient erfindungsgemäß deutlich verbessert ist.

## Patentansprüche

1. Mikrowellenofen, zur Wärmebehandlung von keramischen Bauteilen, insbesondere von dentalkeramischen Bauteilen, mit einem Suszeptor (14), der im Wellengang oder in dem mit Mikrowellenstrahlung beaufschlagten Bereich zwischen einer Mikrowellenquelle und dem Bauteil angeordnet ist, **dadurch gekennzeichnet, dass** der Suszeptor (14) aus hochreinem Siliciumcarbid mit Verunreinigungen von weniger als 10⁻¹ ppm, bevorzugt von weniger als 10⁻² ppm, in hexagonaler, rhomboedrischer oder kubischer Kristallstruktur, insbesondere in 2H-, 4H-, 6H- oder 3C-Kristallstruktur, aufweist, und dass es sich bei dem Siliciumcarbid um einen Einkristall handelt.

2. Mikrowellenofen nach Anspruch 1, **dadurch gekennzeichnet, dass** das Bauteil (12) an Mikrowellenstrahlungen breitbandig, insbesondere über ein Band von mehr als 10 % der Mikrowellen-Grundfrequenz der verwendeten Mikrowellenquelle, ankoppelt, insbesondere bereits bei Raumtemperatur und/oder bei 0°C und auch bei der für das Sintern von Dentalkeramiken höchsten verwendeten Temperatur, insbesondere auch bei 2000°C.

3. Mikrowellenofen nach einem der vorhergehenden Ansprüche, **dadurch gekennzeichnet, dass** der Mikrowellenofen (10) eine für den Monomoden- oder für den Multimoden-Betrieb geeignete Kavität aufweist.

4. Mikrowellenofen nach einem der vorhergehenden Ansprüche, **dadurch gekennzeichnet, dass** der Suszeptor (14) gegenüber dem Stoff und/oder dem keramischen Bauteil (12) inert oder nicht-reaktiv, insbesondere an seiner Oberfläche, ausgestaltet ist und bei Anlage eine chemische Reaktion zwischen Bauteil (12) und Suszeptor (14) vermieden wird.

5. Mikrowellenofen nach einem der vorhergehenden Ansprüche, **dadurch gekennzeichnet, dass** der Suszeptor (14) eine Wärmeleitfähigkeit >200 W/mK aufweist, insbesondere etwa 350 W/mK.

6. Mikrowellenofen nach einem der vorhergehenden Ansprüche, **dadurch gekennzeichnet, dass** der Suszeptor (14) eine geometrische Ausbildung in Ring-, Scheiben- oder sonstigen geometrischen Formen besitzt und in direktem Kontakt bzw. in unmittelbarer Nähe zum wärmezubehandelnden Bauteil und/oder Stoff steht.

7. Mikrowellenofen nach einem der vorhergehenden Ansprüche, **dadurch gekennzeichnet, dass** ein maximaler Abstand des Suszeptors (14) zu dem Stoff oder Bauteil < 5 cm beträgt.

8. Mikrowellenofen nach einem der vorhergehenden Ansprüche, **dadurch gekennzeichnet, dass** der Mikrowellenofen (10) einen geschlossenen Innenraum (34) aufweist, der mit der Mikrowellenquelle (32) in Wellenverbindung steht, wobei die Mikrowellenquelle die einzige Wärmequelle ist.

9. Mikrowellenofen nach einem der Ansprüche 1 bis 7, **dadurch gekennzeichnet, dass** der Mikrowellenofen (10) eine zusätzliche Wärmequelle, insbesondere eine Infrarotstrahlende Wärmequelle aufweist, die den Suszeptor (14) und/oder das Bauteil oder den Stoff mit Wärmeenergie beaufschlagt.

10. Mikrowellenoferi nach einem der vorhergehenden Ansprüche, **dadurch gekennzeichnet, dass** ein optischer Temperaturmesssensor auf eine Suszeptoroberfläche gerichtet ist, insbesondere auf eine dem Bauteil (12) zugewandte Suszeptoroberfläche, wenn ein offener Suszeptor eingesetzt ist, und die Temperatur des Bauteils basierend auf der Oberfläche des Suszeptors (14) erfasst.

11. Mikrowellenofen nach einem der vorhergehenden Ansprüche, **dadurch gekennzeichnet, dass** der Stoff oder das Bauteil nicht selbst-koppelnd für Mikrowellenstrahlung ist und seine Erwärmung vollständig durch Wärmeabgabe des Suszeptors (14) erfährt.

12. Mikrowellenofen nach einem der Ansprüche 1 bis 10, **dadurch gekennzeichnet, dass** der Stoff oder das Bauteil selbständig koppelnd für Mikrowellenstrahlung ist und der Suszeptor (14) als Grundlast-Mikrowellensenke ausgebildet ist und ein vorgegebenes Maß an Mikrowellenstrahlung absorbiert und insbesondere eine gleichmäßige Temperaturverteilung, frei von Hot Spots, bewirkt.

13. Mikrowellenofen nach einem der vorhergehenden Ansprüche, **dadurch gekennzeichnet, dass** der Innenraum (34) des Mikrowellenofens (10) gasdicht abgeschlossen ist und unter Über- oder Unterdruck setzbar ist, und insbesondere mit einem Spülgas spülbar ist und besonders bevorzugt als offener oder geschlossener Durchlaufofen ausgebildet ist.

## Claims

1. A microwave oven for the heat treatment of ceramic components, in particular of dental ceramic components, comprising a susceptor (14) which is positioned in the wave propagation space or in the area between a source of microwaves and the component, which area is exposed to microwave radiation, **characterized in that** the susceptor (14) is made of highly pure silicon carbide, with impurities of less than 10⁻¹ ppm, preferably of less than 10⁻² ppm, of hexagonal, rhombohedral or cubic crystal structure, in particular of 2H, 4H, 6H or 3C crystal structure, and **in that** the silicon carbide is a single crystal.

2. The microwave oven in accordance with Claim 1, **characterized in that** the component (12) is coupled to microwave radiation in a broad-band fashion, in particular via a band of more than 10% of the fundamental microwave frequency of the source of microwaves used, in particular already at room temperature and/or at 0°C and also at the maximum temperature used for sintering dental ceramics, in particular also at 2000°C.

3. The microwave oven in accordance with one of the previous Claims, **characterized in that** the microwave oven (10) has a cavity suited for mono-mode or for multi-mode operation.

4. The microwave oven in accordance with one of the previous Claims, **characterized in that** the susceptor (14) is formed in such a fashion that it is inert or non-reactive towards the substance and/or the ceramic component (12), in particular at its surface, and in case of contact, a chemical reaction between component (12) and susceptor (14) is avoided.

5. The microwave oven in accordance with one of the previous Claims, **characterized in that** the susceptor (14) has a thermal conductivity of >200 W/mK, in particular of approximately 350 W/mK.

6. The microwave oven in accordance with one of the previous Claims, **characterized in that** the susceptor (14) has a geometrical configuration of ring-, disc- or other geometrical shapes and is in direct contact with or in immediate proximity of the component and/or substance to be heat-treated.

7. The microwave oven in accordance with one of the previous Claims, **characterized in that** a maximum distance between the susceptor (14) and the substance or component is <5 cm.

8. The microwave oven in accordance with one of the previous Claims, **characterized in that** the microwave oven (10) has a closed interior (34), which is in wave connection with the source of microwaves (32), with the source of microwaves being the only heat source.

9. The microwave oven in accordance with one of Claims 1 to 7, **characterized in that** the microwave oven (10) has an additional heat source, in particular a heat source radiating in the infrared spectrum, which exposes the susceptor (14) and/or the component or the substance to thermal energy.

10. The microwave oven in accordance with one of the previous Claims, **characterized in that** an optical temperature measuring sensor is directed at a surface of the susceptor, in particular at a surface of the susceptor which is pointing in the direction of the component (12), if an open susceptor is employed, and detects the temperature of the component based on the surface of the susceptor (14),

11. The microwave oven in accordance with one of the previous Claims, **characterized in that** the substance or the component is not self-coupling for microwave radiation and is heated up entirely by the heat emission of the susceptor (14).

12. The microwave oven in accordance with one of Claims 1 to 10, **characterized In that** the substance or the component is independently coupling for microwave radiation and the susceptor (14) is shaped as abase load microwave sink and absorbs a previously determined load of microwave radiation and in particular causes a uniform distribution of temperature, free of hot spots.

13. The microwave oven in accordance with one of the previous Claims, **characterized in that** the interior (34) of the microwave oven (10) is closed in such a fashion that it is gas-tight and that positive or negative pressure can be applied to it, and in particular can be flushed with the help of a flush gas and is particularly preferably shaped as an open or closed continuous furnace.

## Revendications

1. Four à micro-ondes pour le traitement thermique de composants céramiques, en particulier de composants céramiques dentaires, avec un suscepteur (14) qui est agencé dans le couloir des ondes ou dans la zone alimentée en rayonnement à micro-ondes, entre une source de micro-ondes et le composant, **caractérisé en ce que** le suscepteur (14) est composé d'un carbure de silicium très pur avec des impuretés de moins de 10⁻¹ ppm, de préférence de moins de 10⁻² ppm, dans une structure cristalline hexagonale, rhomboédrique ou cubique, en particulier dans une structure cristalline 2H, 4H, 6H ou 3C et **en ce qu'**il s'agit pour le carbure de siliciure d'un monocristal.

2. Four à micro-ondes selon la revendication 1, **caractérisé en ce que** le composant (12) se couple à des rayonnements de micro-ondes à large bande, en particulier par une bande de plus de 10 % de la fréquence de base des micro-ondes de la source de micro-ondes utilisée, en particulier même à temperature ambiante et/ou à 0°C, et même, au maximum, à la température utilisée pour le frittage de céramique dentaires, en particulier à 2 000 °C.

3. Four à micro-ondes selon l'une quelconque des revendications précédentes, **caractérisé en ce que** le four à micro-ondes (10) présente une cavité appropriée au fonctionnement monomode ou multimode.

4. Four à micro-ondes selon l'une quelconque des revendications précédentes, **caractérisé en ce que** le suscepteur (14) est configuré par rapport au matériau et/ou au composant céramique (12) de manière inerte ou non réactive, en particulier sur sa surface et en cas d'appui, une réaction chimique entre le composant (12) et le suscepteur (14) est évitée.

5. Four à micro-ondes selon l'une quelconque des revendications précédentes, **caractérisé en ce que** le suscepteur (14) présente une conductivité thermique > à 200 W/mK, s'élevant en particulier à environ 350 W/mK.

6. Four à micro-ondes selon l'une quelconque des revendications précédentes, **caractérisé en ce que** le suscepteur (14) possède une réalisation géométrique dans des formes géométriques annulaires, discoïdes ou autres et est en contact direct ou à proximité immédiate du composant et/ou du matériau à traiter theraniquement .

7. Four à micro-ondes selon l'une quelconque des revendications précédentes, **caractérisé en ce qu'**une distance maximal du suscepteur (14) par rapport au matériau ou composant est < à 5 cm.

8. Four à micro-ondes selon l'une quelconque des revendications précédentes, **caractérisé en ce que** le four à micro-ondes (10) présente un espace intérieur (34) fermé qui est en liaison d'ondes avec la source de micro-ondes (32), la source de micro-ondes étant à seule source de chaleur.

9. Four à micro-ondes selon l'une quelconque des revendications 1 à 7, **caractérisé en ce que** le four à micro-ondes (10) présente une source de chaleur supplémentaire, en particulier une source de chaleur à rayonnement infrarouge qui alimente le suscepteur (14) et/ou le composant ou le matériau en énergie thermique.

10. Four à micro-ondes- selon l'une quelconque des revendications précédentes, **caractérisé en ce qu'**un capteur de mesure de température optique est dirigé sur une surface de suscepteur, en particulier sur une surface de suscepteur orientée vers le composant (12) si un suscepteur ouvert est utilisé, et détecte la
température du composant en se fondant sur la surface du suscepteur (14).

11. Four à micro-ondes selon l'une quelconque des revendications précédentes, **caractérisé en ce que** le matériau ou le composant ne se couple pas avec lui-même pour le rayonnement de micro-ondes et subit complètement son échauffement par émission de chaleur du suscepteur (14).

12. Four à micro-ondes selon l'une quelconque des revendications 1 à 10, **caractérisé en ce que** le matériau ou le composant se couple de manière autonome pour le rayonnement à micro-ondes, et le suscepteur (14) est réalisé comme un puits à micro-ondes de charge de base, et absorbe une mesure prescrite de rayonnement à micro-ondes, et provoque en particulier une distribution de température uniforme sans point chaud.

13. Four à micro-ondes selon l'une quelconque des revendications précédentes, **caractérisé en ce que** l'espace intérieur (34) du four à micro-ondes (10) est fermé de manière étanche au gaz et peut être placé en surpression ou dépression, et en particulier peut être rincé par un gaz de purge et est réalisé de manière particulièrement préférée comme un four à passage continu ouvert ou fermé.
